# EUROPÄISCHE PATENTSCHRIFT

(11) **EP 2 865 066 B1**
(45) Veröffentlichungstag und Bekanntmachung des Hinweises auf die Patenterteilung: **30.03.2022**
(21) Anmeldenummer: 13717780.4
(22) Anmeldetag: 22.04.2013
(51) Int. Cl.: H02J 3/00, H02J 3/38, H02J 3/32, H02J 7/35

(54) **BETRIEBSVERFAHREN UND BETRIEBSVORRICHTUNG FÜR EINEN ELEKTRISCHEN ENERGIESPEICHER EINES KLEINKRAFTWERKES ZUM ERHÖHEN DER BETRIEBSEFFEKTIVITÄT DES KLEINKRAFTWERKES**
OPERATING METHOD AND OPERATING APPARATUS FOR AN ELECTRICAL ENERGY STORE OF A SMALL-SCALE POWER PLANT FOR INCREASING THE OPERATING EFFICIENCY OF THE SMALL-SCALE POWER PLANT
PROCÉDÉ ET DISPOSITIF PERMETTANT DE FAIRE FONCTIONNER UN ACCUMULATEUR D'ÉNERGIE ÉLECTRIQUE D'UNE MICROCENTRALE POUR AUGMENTER L'EFFICACITÉ DE FONCTIONNEMENT DE LA MICROCENTRALE

(30) Priorität: 20.06.2012 DE 102012210396
(43) Veröffentlichungstag der Anmeldung: 29.04.2015
(73) Patentinhaber: Robert Bosch GmbH, 70442 Stuttgart (DE)
(72) Erfinder: PREISSNER, Marcus, 71665 Vaihingen (DE); MAY, Johanna, 71634 Ludwigsburg (DE)
(86) Internationale Anmeldenummer: PCT/EP2013/058294
(87) Internationale Veröffentlichungsnummer: WO 2013/189628

(56) Entgegenhaltungen:
- DE-A1- 19 535 752
- DE-A1-102005 051 317
- DE-A1-102008 052 986
- DE-A1-102009 040 090
- DE-A1-102010 006 527
- US-A1- 2007 203 860

## Beschreibung

Die vorliegende Erfindung betrifft ein Betriebsverfahren und eine Betriebsvorrichtung für einen elektrischen Energiespeicher eines Kleinkraftwerkes zum Erhöhen der Betriebseffektivität des Kleinkraftwerkes.

### Stand der Technik

Die DE1 0 2009 040 090 betrifft eine Energiesteuerungsvorrichtung für ein Energienetz und ein Verfahren zum Steuern eines Betriebes einer Energiesteuerungsvorrichtung. Um eine bedarfsgerechte und optimierte Versorgung einer mit der Energiesteuerungsvorrichtung verbundenen Lasteinheit zu ermöglichen, wird eine Energiesteuerungsvorrichtung vorgeschlagen, die aufweist: eine Energieerzeugungseinheit, insbesondere eine Photovoltaikeinheit, zum Erzeugen von Energie aus erneuerbaren Ressourcen, eine Energiespeichereinheit zum Speichern von Energie, eine Lastanschlusseinheit zum Verbinden der Energiesteuerungsvorrichtung mit einer Lasteinheit zum Verbrauchen von Energie, eine Netzanschlusseinheit, insbesondere eine Wechselrichtereinheit, zum Verbinden der Energiesteuerungsvorrichtung mit einem Energienetz, zum Entnehmen von Energie aus dem Energienetz und zum Zuführen von Energie in das Energienetz, und eine Steuereinheit zum Steuern eines Energieflusses zwischen der Energieerzeugungseinheit, der Energiespeichereinheit, der Lasteinheit und/oder dem Energienetz.

Die DE 20 2010 001 342 U1 beschreibt einen Akkumulator-Laderegler, welcher die optimale Ladefunktion der Akkumulatoren regelt. Dabei können entsprechend der dort beschrieben Akkumulator-Laderegler-Technologie spezielle Funktionen implementiert werden.

Die dort beschriebenen Akkumulatoren stellen im Wesentlichen eine spannungsabhängige Last für den Akkumulator-Laderegler dar. Es werden auch im Akkumulator-Laderegler Halbleiterschaltelemente verwendet, die im Prinzip den Ausgang des Gleichspannungsumsetzers auf die Akkumulatoren schalten. Bei Erreichen des vollen Ladezustandes wird die Aufschaltung des Gleichspannungsumsetzers Ausgangs auf die Akkumulatoren getrennt.

Die dort beschriebenen Akkumulatoren stellen im Wesentlichen eine spannungsabhängige Last für den Akkumulator-Laderegler dar. Es werden auch im Akkumulator-Laderegler Halbleiterschaltelemente verwendet, die im Prinzip den Ausgang des Gleichspannungsumsetzers auf die Akkumulatoren schalten. Bei Erreichen des vollen Ladezustandes wird die Aufschaltung des Gleichspannungsumsetzers Ausgangs auf die Akkumulatoren getrennt.

Die dort beschriebene Akkumulator-Laderegler-Steuerung kann dann eine Meldung an eine übergeordnete Steuerung liefern, so dass in diesem Falle die Photovoltaikmodule wieder ausschließlich auf direkte Netzeinspeisung geschaltet werden.

In den letzten Jahren stand in den Hauptmärkten für Photovoltaik die vollständige Einspeisung des erzeugten Stroms aufgrund der monetären Randbedingungen im Vordergrund aufgrund der garantierten Einspeisevergütung oberhalb des Marktpreises des Stroms. Der Begriff "Grid Parity", zu Deutsch "Netz Parität", bezeichnet den Zustand gleicher Kosten für selbst erzeugte im Vergleich zu eingekaufter, elektrischer Energie.

Die dort beschriebene Akkumulator-Laderegler-Steuerung kann dann eine Meldung an eine übergeordnete Steuerung liefern, so dass in diesem Falle die Photovoltaikmodule wieder ausschließlich auf direkte Netzeinspeisung geschaltet werden.

In den letzten Jahren stand in den Hauptmärkten für Photovoltaik die vollständige Einspeisung des erzeugten Stroms aufgrund der monetären Randbedingungen im Vordergrund aufgrund der garantierten Einspeisevergütung oberhalb des Marktpreises des Stroms. Der Begriff "Grid Parity", zu Deutsch "Netz Parität", bezeichnet den Zustand gleicher Kosten für selbst erzeugte im Vergleich zu eingekaufter, elektrischer Energie.

Netzparität gilt üblicherweise dann als erreicht, wenn aus Sicht der Endverbraucher selbst produzierter Strom dieselben Kosten je Kilowattstunde verursacht wie der Kauf von einem Stromanbieter, also der Strombezug über das Netz. Mit Erreichen der "Grid Parity" rückt das Ziel des möglichst hohen Selbstverbrauchs des vom Kraftwerk erzeugten Stroms in den Fokus.

Ohne elektrischen Zwischenspeicher kann abhängig von der Größe der Kleinkraftwerkanlage, des Standorts und des Nutzerprofils im typischen Einfamilienhaus ein gutes Drittel des benötigten Energiebedarfs vor der Kleinkraftwerkanlage erzeugt und direkt verbraucht werden. Die restliche zwei Drittel werden zu anderen Zeiten zugekauft - zu höheren Kosten als die Produktionskosten der eigenen Anlage.

Zur Erhöhung des Selbstverbrauchs werden Batteriesysteme eingesetzt: ein elektrischer Zwischenspeicher wird geladen, wenn die Kleinkraftwerkstromerzeugung höher als der Verbrauch im Haushalt ist, und gibt diese Energie zu den Zeiten wieder ab, zu welchen die Kleinkraftwerkstromerzeugung geringer ist als der Verbrauch im Haushalt.

Die Nutzung der Batterien beim Laden und Entladen lässt diese altern. Je häufiger und intensiver die Nutzung, wie etwa bei einer hohen Entladetiefe und/oder durch hohe Entladeströme, zur Erhöhung des Selbstverbrauchs stattfindet, desto schneller altern die Batterien - die Lebensdauer sinkt.

Es existiert somit ein Zielkonflikt zwischen einer Maximierung des Selbstverbrauchs des Kleinkraftwerks und einer Maximierung der Batterielebensdauer des elektrischen Zwischenspeichers.

### Offenbarung der Erfindung

Die vorliegende Erdfindung betrifft ein Betriebsverfahren für einen elektrischen Energiespeicher eines Kleinkraftwerkes zum Erhöhen der Betriebseffektivität des Kleinkraftwerkes mit den Schritten: Bereitstellen von mindestens einem Anlagenparameter des Kleinkraftwerkes; Ermitteln einer Speicherkapazität des elektrischen Energiespeichers des Kleinkraftwerkes, eines Ertragsprofils des Kleinkraftwerkes und eines Nutzerprofils eines Nutzers des Kleinkraftwerkes durch eine Sensoreinrichtung; Festlegen einer Betriebsstrategie für das Kleinkraftwerk in Abhängigkeit von der ermittelten Speicherkapazität, von dem Nutzerprofil und von dem Ertragsprofil sowie von mindestens einem Anlagenparameter des Kleinkraftwerkes durch eine Steuerungseinrichtung, wobei die Betriebseffektivität durch ein Erhöhen einer Lebensdauer des elektrischen Energiespeichers und/oder ein Maximieren eines Selbstverbrauches von mittels des Kleinkraftwerks erzeugter elektrischer Energie erhöht wird; und Steuern des Kleinkraftwerkes anhand der festgelegten Betriebsstrategie durch die Steuerungseinrichtung zum Erhöhen der Betriebseffektivität des Kleinkraftwerkes. Mikrozyklen, d.h. Zyklen in denen etwa weniger als 1 % der Speicherenergie der Batterie umgesetzt wird, können die Lebensdauer der Batterie deutlich reduzieren. Als Alternative werden zur Verlängerung der Lebensdauer Spitzenlasten aus dem Stromnetz entnommen anstatt aus der Batterie. Ebenso kann das Laden der Batterie mit geringen Laderaten, etwa weniger als 10 % der Gesamtkapazität, sich negativ auf die Lebensdauer auswirken und darüber hinaus energetisch nicht sinnvoll sein.

Ferner schafft die vorliegende Erfindung eine Betriebsvorrichtung für einen elektrischen Energiespeicher eines Kleinkraftwerkes zum Erhöhen der Betriebseffektivität des Kleinkraftwerkes, wobei die Betriebsvorrichtung aufweist: eine Datenspeichereinrichtung zum Bereitstellen von mindestens einem Anlagenparameter des Kleinkraftwerkes; eine Sensoreinrichtung, welche dazu ausgelegt ist, eine Speicherkapazität des elektrischen Energiespeichers des Kleinkraftwerkes, ein Ertragsprofil des Kleinkraftwerkes und ein Nutzerprofil eines Nutzers des Kleinkraftwerkes zu ermitteln; und eine Steuerungseinrichtung, welche dazu ausgelegt ist, eine Betriebsstrategie für das Kleinkraftwerk in Abhängigkeit von der ermittelten Speicherkapazität, von dem Ertragsprofil, von dem Nutzerprofil und von dem mindestens einem Anlagenparameter des Kleinkraftwerkes festzulegen, wobei die Betriebseffektivität durch ein Erhöhen einer Lebensdauer des elektrischen Energiespeichers und/oder ein Maximieren eines Selbstverbrauches von mittels des Kleinkraftwerks erzeugter elektrischer Energie erhöhbar ist; und die Steuerungseinrichtung dazu ausgelegt ist, das Kleinkraftwerk anhand der festgelegten Betriebsstrategie zum Erhöhen der Betriebseffektivität des Kleinkraftwerkes zu steuern.

Als Betriebseffektivität im Sinne der Erfindung ist dabei ein Verhältnis von einem durch den Betrieb des Kleinkraftwerkes erreichten Ziel zu einem definierten Ziel umfasst. Dieses Verhältnis bzw. diese Betriebseffektivität umfasst im Sinne der Erfindung ebenso einen Zielerreichungsgrad sowie eine dem Kleinkraftwerk zugeordnete Betriebseffizienz, welche als ein Verhältnis zwischen einem definierten Nutzen des Kleinkraftwerkes und dem für den Betrieb des Kleinkraftwerkes betriebenen und definierten Aufwand, der zu dessen Erreichung notwendig ist, im Sinne der Erfindung definiert ist. Dabei kann im Sinne der Erfindung der definierte Nutzen in einem monetären Gesamtgewinn und der definierte Aufwand in monetären Gesamtkosten dargestellt werden.

Eine Idee der vorliegenden Erfindung ist es daher, die Alterung einer elektrischen Energiespeicherbatterie zu minimieren, um so die Betriebseffektivität bzw. die Betriebseffizienz zu erhöhen. Die Betriebsstrategie bestimmt die Tiefe der Zyklen, das heißt, wie viel Prozent der Energie entnommen wird, bevor wieder eine Aufladung des elektrischen Energiespeichers vorgenommen wird. Die Stärke der Alterung des elektrischen Energiespeichers ist für verschiedene Batterietypen sehr unterschiedlich. Hier kann die Betriebsstrategie durch eine optimale Ausnutzung eingreifen. Alle folgenden exemplarisch genannten Betriebsstrategien reduzieren den Selbstverbrauch der Batterie bei gleichzeitiger Erniedrigung der Batteriedegradation. Die Detailoptimierung abhängig vom Batterietyp zielt darauf ab, den Selbstverbrauch nur geringfügig zu reduzieren, und die Lebensdauer deutlich zu erhöhen.

Die Batterie wird so betrieben, dass bestimmte ungünstige Zustände der Lagerung gar nicht, in deutlich geringerem Umfang oder nur in abgeschwächter Form auftreten.

Bestimmte Typen von Li-Ionen Batterien haben im mittleren Ladezustand eine hohe Alterung, insbesondere bei hoher Betriebstemperatur. Daher ist es nicht sinnvoll, die Batterie halb zu Entladen. Ebenso sollte eine Bleibatterie im Winter nicht tief entladen werden, um dann über Wochen oder ein halbes Jahr lang nicht wieder richtig vollgeladen zu werden.

Die Alterung der Batterien wird auch durch das Nutzungsverhalten bestimmt. Je tiefer die als elektrischer Energiespeicher verwendete Batterie entladen wird, desto negativer wirkt sich das auf die Lebensdauer aus. Ebenso hat die Art der mit der Batterie gefahrenen Zyklen eine Auswirkung auf die Alterung der Batterie.

Alterungseffekte bei einer Zyklisierung der Batterie zwischen 80 und 90 % der Energiespeicherkapazität weichen deutlich ab von einer Alterung bei einer Zyklisierung zwischen 30 und 40 % der Energiespeicherkapazität. Je nach Batterietyp ist ersteres oder letztes von Vorteil. Hier kann zur Lebensdauerverlängerung der Batterie der Ladezustand durch die Betriebsstrategie tendenziell im für die Lebensdauer günstigeren Bereich gehalten werden.

Es ist also für jeden Fall eine Zieloptimierung zwischen einem Schädigungsumfang und einem Selbstverbrauch erforderlich. Dazu ist mit Hilfe von Jahressimulationen der energetische Nachteil bei einer Nichtnutzung der vom Kleinkraftwerk erzeugten Energie zu berechnen und den Kosten der Alterung der Batterie gegenüberzustellen.

Alle Maßnahmen hierfür lassen sich als Algorithmen in das Betriebsverfahren mit festgelegten Anlagenparametern einbauen. Da jedoch die Anwendungen, insbesondere Nutzerverhalten, Standort und Kleinkraftwerkanlagen- und Batteriegröße deutlich variieren, kann ein adaptiver Algorithmus deutliche Vorteile haben. Der adaptive Algorithmus hat insbesondere Vorteile, wenn sich die Anlagenparameter über die Nutzungsdauer hinweg ändern.

Die Abwägung kann technisch erfolgen: wie muss die Batterie betrieben werden, damit eine gewisse Lebensdauer oder ein gewisser Selbstverbrauch erreicht wird. In der Erweiterung um die monetäre Komponente werden beispielsweise der Strompreis, etwa durch vermiedenen Kosten durch Selbstverbrauch, und die Widerbeschaffungskosten einer wegen der erfolgten Alterung auszutauschenden Batterie als Anlagenparameter mit hinzugezogen, und die Gesamtkosten werden minimiert. Die Kosten und Preise sind weder fix noch von Anfang an bekannt, die Startwerte können vom Nutzer als Anlagenparameter oder über das Internet angepasst werden.

Vorteilhafte Ausführungsformen und Weiterbildungen ergeben sich aus den Unteransprüchen sowie aus der Beschreibung unter Bezugnahme auf die Figuren.

Gemäß einer vorteilhaften Ausführungsform der Erfindung ist vorgesehen, dass das Ertragsprofil des Kleinkraftwerkes in Form eines Tagesverlaufs einer Kraftwerksleistung des Kleinkraftwerks und/oder eines Wochenverlaufs einer Kraftwerksleistung des Kleinkraftwerks und/oder eines Monatsverlaufs einer Kraftwerksleistung des Kleinkraftwerks und/oder eines Jahresverlaufs einer Kraftwerksleistung des Kleinkraftwerks und/oder eine Nennleistung des Kleinkraftwerks bereitgestellt werden. Dies erlaubt vorteilhaft eine Optimierung des Betriebsverfahrens an veränderte Randbedingungen des Kleinkraftwerkes.

Gemäß einer vorteilhaften Ausführungsform der Erfindung ist vorgesehen, dass als das Nutzerprofils des Nutzers des Kleinkraftwerkes ein Tagesverlauf des Nutzerprofils und/oder ein Wochenverlauf des Nutzerprofils und/oder ein Monatsverlauf des Nutzerprofils und/oder ein Jahresverlauf des Nutzerprofils bereitgestellt werden. Dies erlaubt vorteilhaft eine Optimierung des Betriebsverfahrens an ein verändertes Nutzerverhalten.

Gemäß einer vorteilhaften Ausführungsform der Erfindung ist vorgesehen, dass die Betriebsstrategie für das Kleinkraftwerk entsprechend der ermittelten Speicherkapazität und/oder entsprechend dem Nutzerprofil und/oder entsprechend dem mindestens einem Anlagenparameter des Kleinkraftwerkes durch die Steuerungseinrichtung angepasst wird. Dies erlaubt vorteilhaft, die Parameter der Betriebsstrategie und den Ablauf der Betriebsstrategie entsprechend der gemessenen Randbedingungen adaptiert und optimiert werden.

Gemäß einer weiteren vorteilhaften Ausführungsform der Erfindung ist vorgesehen, dass beim Ermitteln der Speicherkapazität des elektrischen Energiespeichers durch die Sensoreinrichtung die dem elektrischen Energiespeicher entnommene oder zugeführte elektrische Ladungsmenge durch die Sensoreinrichtung erfasst wird. Dies ermöglicht vorteilhaft, einen effizienten Betrieb der Betriebsvorrichtung zu ermöglichen.

Gemäß einer weiteren vorteilhaften Ausführungsform der ist vorgesehen, dass beim Ermitteln des Nutzerprofils des Nutzers des Kleinkraftwerkes die durch den Nutzer entnommene oder zugeführte elektrische Ladungsmenge durch die Sensoreinrichtung erfasst wird. Dies erlaubt auch ein sich änderndes Nutzerverhalten des Nutzers des Kleinkraftwerkes sicher zu erfassen.

Gemäß einer weiteren vorteilhaften Ausführungsform der Erfindung ist vorgesehen, dass zum Erhöhen der Lebensdauer des elektrischen Energiespeichers ein oder mehrere bestimmte ungünstige Ladezustände des elektrischen Energiespeichers in der Betriebsstrategie festgelegt werden. Dadurch wird ein effizienter und energiesparsamer Betrieb der Vorrichtung erreicht.

Gemäß einer weiteren vorteilhaften Ausführungsform der Erfindung ist vorgesehen, dass zum Erhöhen der Lebensdauer des elektrischen Energiespeichers eine bestimmte Entladetiefe des elektrischen Energiespeichers in der Betriebsstrategie festgelegt wird. Dies ermöglicht eine kostengünstige Betriebsweise der Vorrichtung.

Gemäß einer weiteren vorteilhaften Ausführungsform der Erfindung ist vorgesehen, dass zum Erhöhen der Lebensdauer des elektrischen Energiespeichers ein bestimmter Lade- und Entladezyklus des elektrischen Energiespeichers in der Betriebsstrategie festgelegt wird. Dadurch kann die Lebensdauer des elektrischen Energiespeichers erhöht werden und ein betriebsbedingter Kapazitätsverlust des elektrischen Energiespeichers verringert werden.

Gemäß einer weiteren vorteilhaften Ausführungsform der Erfindung ist vorgesehen, dass zum Maximieren des Selbstverbrauches von mittels des Kleinkraftwerks erzeugter elektrischer Energie ein zusätzlicher zeitlich variabler Bedarf und/oder ein zusätzlicher zeitlich variabler Überschuss an elektrischer Energie mittels Energiefluss in ein und/oder aus einem Stromnetz in der Betriebsstrategie festgelegt wird. Dies erlaubt vorteilhaft, das Kleinkraftwerk an allen möglichen Stellen oder Orten verteilt in das Stromnetz zu integrieren, so dass der Strom zu jeder Stunde des Tages verlässlich zur Verfügung steht und mittels dezentraler Stromerzeugung die Netzqualität verbessert wird.

Gemäß einer weiteren vorteilhaften Ausführungsform der Erfindung ist vorgesehen, dass als der mindestens eine Anlagenparameter des Kleinkraftwerks eine auf Wetterdaten basierende Prognose einer Ertragsleistung des Kleinkraftwerks bereitgestellt wird. Dies ermöglicht vorteilhaft, die den Betrieb der Betriebsvorrichtung an Witterungsbedingungen anpassen zu können.

Die obigen Ausgestaltungen und Weiterbildungen lassen sich, sofern sinnvoll, beliebig miteinander kombinieren. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Weitere Merkmale und Vorteile der vorliegenden Erfindung werden nachfolgend anhand der Figuren erläutert.

Es zeigen:
- Fig. 1: eine schematische Darstellung eines Flussdiagramms eines Betriebsverfahrens für einen elektrischen Energiespeicher eines Kleinkraftwerkes zum Erhöhen der Betriebseffektivität des Kleinkraftwerkes gemäß einer Ausführungsform der vorliegenden Erfindung; und
- Fig. 2: eine schematische Darstellung einer Betriebsvorrichtung für einen elektrischen Energiespeicher eines Kleinkraftwerkes zum Erhöhen der Betriebseffektivität des Kleinkraftwerkes gemäß einer weiteren Ausführungsform der vorliegenden Erfindung.

In allen Figuren sind gleiche bzw. funktionsgleiche Elemente und Vorrichtungen - sofern nichts Anderes angegeben ist - mit denselben Bezugszeichen versehen worden.

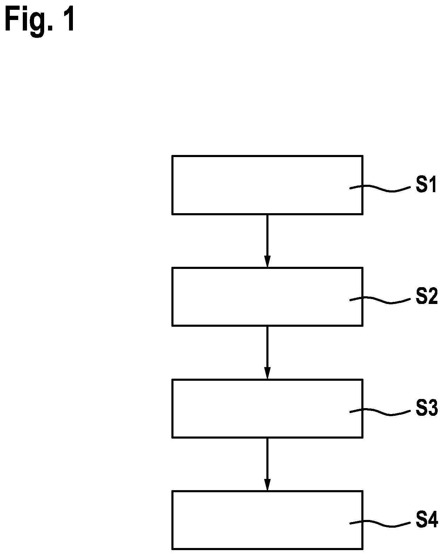

Die Figur 1 zeigt eine schematische Darstellung eines Flussdiagramms eines Betriebsverfahrens für einen elektrischen Energiespeicher eines Kleinkraftwerkes zum Erhöhen der Betriebseffektivität des Kleinkraftwerkes gemäß einer Ausführungsform der vorliegenden Erfindung.

Die erhöhte Betriebseffektivität des Kleinkraftwerkes umfasst dabei sowohl ein Erhöhen der Lebensdauer des elektrischen Energiespeichers als auch ein Maximieren eines Selbstverbrauchs des Kleinkraftwerkes 100.

Das Betriebsverfahren für einen elektrischen Energiespeicher eines Kleinkraftwerkes zum Erhöhen der Betriebseffektivität des Kleinkraftwerkes wird durch die Betriebsvorrichtung 5 durchgeführt.

In einem ersten Verfahrensschritt erfolgt ein Bereitstellen S1 von mindestens einem Anlagenparameter des Kleinkraftwerkes 100.

In einem zweiten Verfahrensschritt erfolgt ein Ermitteln S2 einer Speicherkapazität des elektrischen Energiespeichers 50 des Kleinkraftwerkes 100, eines Ertragsprofils des Kleinkraftwerks 100 und eines Nutzerprofils eines Nutzers des Kleinkraftwerkes 100 durch eine Sensoreinrichtung 20.

Das Nutzerprofil des Nutzers des Kleinkraftwerkes 100 wird beispielsweise in Form eines Tagesverlaufs des Nutzerprofils und/oder eines Wochenverlaufs des Nutzerprofils und/oder eines Monatsverlaufs des Nutzerprofils und/oder eines Jahresverlaufs des Nutzerprofils durch die Sensoreinrichtung 20 ermittelt.

In einem dritten Verfahrensschritt erfolgt ein Festlegen S3 einer Betriebsstrategie für das Kleinkraftwerk 100 in Abhängigkeit von der ermittelten Speicherkapazität, von dem Ertragsprofil, von dem Nutzerprofil und von dem mindestens einem Anlagenparameter des Kleinkraftwerkes 100 durch eine Steuerungseinrichtung 10, wobei die Betriebseffektivität durch ein Erhöhen einer Lebensdauer des elektrischen Energiespeichers 50 und/oder ein Maximieren eines Selbstverbrauches von mittels des Kleinkraftwerks 100 erzeugter elektrischer Energie erhöht wird.

In einem vierten Verfahrensschritt erfolgt ein Steuern S4 des Kleinkraftwerkes anhand der festgelegten Betriebsstrategie durch die Steuerungseinrichtung 10 zum Erhöhen der Betriebseffektivität des Kleinkraftwerkes 100.

Als festgelegte Betriebsstrategie können dabei von der Steuerungseinrichtung 10 unterschiedliche Kriterien festgelegt werden. Über die Lebensdauer des Systems laufend angepasste Annahmen ermöglichen den wirtschaftlich optimalen Betrieb. Dies ist besonders wichtig, da sich die Randbedingungen im Bereich Photovoltaik und Strommarkt über den langen anvisierten Betriebszeitraum von mehreren Jahren stark ändern werden. Die Annahmen können durch den Nutzer oder über das Internet aktualisiert werden, sowie auch von dem in der Steuerungseinrichtung 10 implementieren Algorithmus selbst ermittelt werden.

Das Batteriesystem ist für eine Bandbreite der Kleinkraftwerkleistung sowie des Jahresstromverbrauchs oder der Anschlussleistung des Nutzers spezifiziert. Um die Anlage optimiert zu betreiben, können bei der Inbetriebnahme die relevanten Parameter bezüglich des Kleinkraftwerks, des elektrischen Energiespeichers 50 und weitere Randbedingungen eingegeben. Alternativ und additiv können diese im Betrieb ermittelt werden. Dies ergibt eine Optimierung, bei der die Anlage zu Beginn der Lebensdauer besser als mit voreingestellten Parametern betrieben werden kann.

Die Steuerungseinrichtung 10 kann ferner im Betrieb relevante Anlagenparameter, beispielsweise den Tages- sowie Jahresverlauf eines Photovoltaik-Ertrags oder eines sonstigen Ertrags des Kleinkraftwerkes erfassen. Ebenso kann die Speicherkapazität des als Batterie ausgebildeten elektrischen Energiespeichers 50 und das erwartete Nutzerprofil aus den Nutzerprofilen der Vergangenheit ermittelt werden. Ebenso wird eine Bandbreite des Verbrauchs mit zugeordneter Wahrscheinlichkeit bestimmt. Der Faktor Wetter hat erheblichen Einfluss auf die Ertragsleistung des Kleinkraftwerks, daher ist eine Bandbreite des Ertrags mit zugeordneter Wahrscheinlichkeit zu ermitteln.

Der Zeitraum der im Betrieb durch die Steuerungseinrichtung 10 optimierten Anlagenparameter kann dabei auf die gesamte Betriebszeit ausgedehnt werden. Es können zur Optimierung der Betriebsstrategie die jeweils derzeit wahrscheinlichsten Ertrags- und Bedarfsprognosen verwendet werden.

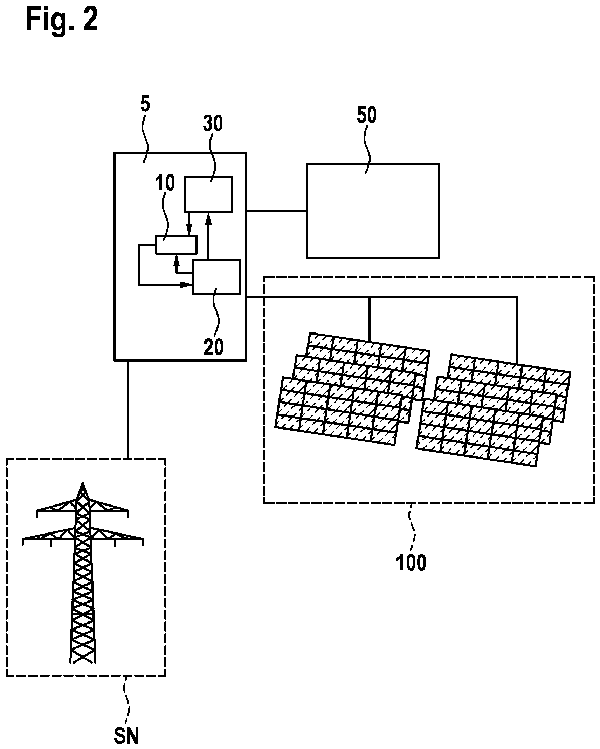

Die Figur 2 zeigt eine schematische Darstellung einer Betriebsvorrichtung für einen elektrischen Energiespeicher eines Kleinkraftwerkes zum Erhöhen der Betriebseffektivität des Kleinkraftwerkes gemäß einer weiteren Ausführungsform der vorliegenden Erfindung.

Ein Stromnetz SN ist beispielsweise über eine Betriebsvorrichtung 5 mit einem Kleinkraftwerk 100 gekoppelt. Die Betriebsvorrichtung 5 ist beispielsweise mit einem elektrischen Energiespeicher 50 gekoppelt.

Die Betriebsvorrichtung 5 ist beispielsweise zur Durchführung des Betriebsverfahrens ausgebildet. Die Betriebsvorrichtung 5 umfasst ferner eine Steuerungseinrichtung 10, eine Sensoreinrichtung 20 und eine Datenspeichereinrichtung 30 zum Abspeichern und Bereitstellen von mindestens einem Anlagenparameter des Kleinkraftwerkes 100.

Der elektrischen Energiespeicher 50 ist beispielsweise als ein Akkumulator, als ein Kondensator oder als ein supraleitender magnetischer Energiespeicher oder als ein Schwungradspeicher ausgebildet.

Das Kleinkraftwerk 100 ist beispielsweise als Kleinwasserkraftwerk, als Photovoltaikanlage, als Solarwärmekraftwerk, als Kleinwindkraftwerk, als Blockheizkraftwerken oder als Wärmepumpenkraftwerk ausgebildet.

Die Steuerungseinrichtung 10 ist beispielsweise als eine speicherprogrammierbare Steuerung, SPS oder als ein sonstiges Gerät ausgebildet, das zur Steuerung oder Regelung einer Maschine oder Anlage eingesetzt wird und auf digitaler Basis programmiert wird.

Die Sensoreinrichtung 20 kann beispielsweise ein Stromzähler oder ein sonstiges Gerät sein, das als ein über einen zeitlichen Verlauf integrierendes Messgerät zur Erfassung der Menge einer gelieferten bzw. verbrauchten elektrischen Größe des Kleinkraftwerks 100 ausgebildet ist.

Die Datenspeichereinrichtung 30 kann als elektrischer Datenspeicher der digitalen Datenverarbeitung oder als ein sonstiges Speichermedium ausgebildet sein, wie etwa ein elektrisch löschbarer und programmierbarer Nur-Lese-Speicher, eine auf EEPROM-Speicher basierende Datenspeicher-Technik oder als ein Halbleiterspeicher.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Die Erfindung wird durch die unabhängigen Ansprüche offenbart, wobei mögliche Ausführungsformen in den abhängigen Ansprüchen definiert werden.

## Patentansprüche

1. Betriebsverfahren für einen als Batterie ausgebildeten elektrischen Energiespeicher (50) eines Kleinkraftwerkes (100) zum Erhöhen der Betriebseffektivität des Kleinkraftwerkes (100) mit den Schritten:
- Bereitstellen (S1) von mindestens einem Anlagenparameter des Kleinkraftwerkes (100);
- Ermitteln (S2) einer Speicherkapazität des elektrischen Energiespeichers (50) des Kleinkraftwerkes (100), eines Ertragsprofils des Kleinkraftwerks (100) und eines Nutzerprofils eines Nutzers des Kleinkraftwerkes (100) durch eine Sensoreinrichtung (20);
- Festlegen (S3) einer Betriebsstrategie für das Kleinkraftwerk (100) in Abhängigkeit von der ermittelten Speicherkapazität, von dem Ertragsprofil des Kleinkraftwerks (100), von dem Nutzerprofil und von dem mindestens einem Anlagenparameter des Kleinkraftwerkes (100) durch eine Steuerungseinrichtung (10); und
- Steuern (S4) des Kleinkraftwerkes anhand der festgelegten Betriebsstrategie durch die Steuerungseinrichtung (10) zum Erhöhen der Betriebseffektivität des Kleinkraftwerkes (100),
**dadurch gekennzeichnet, dass**
die Betriebseffektivität durch ein Erhöhen einer Lebensdauer des elektrischen Energiespeichers (50) erhöht wird, indem Zyklen vermieden werden, in denen weniger als 1 % der Speicherenergie der Batterie umgesetzt wird und alternativ indem Spitzenlasten aus dem Stromnetz anstatt aus der Batterie entnommen werden, ebenso indem das Laden der Batterie mit Laderaten höher als 10 % der Gesamtkapazität erfolgt.

2. Betriebsverfahren nach Anspruch 1,
**dadurch gekennzeichnet,**
**dass** als das Ertragsprofil des Kleinkraftwerks (100) ein Tagesverlauf einer Kraftwerksleistung des Kleinkraftwerks (100) und/oder ein Wochenverlauf einer Kraftwerksleistung des Kleinkraftwerks (100) und/oder ein Monatsverlauf einer Kraftwerksleistung des Kleinkraftwerks (100) und/oder ein Jahresverlauf einer Kraftwerksleistung des Kleinkraftwerks (100) und/oder eine Nennleistung des Kleinkraftwerks (100) bereitgestellt werden.

3. Betriebsverfahren nach einem der Ansprüche 1 und 2,
**dadurch gekennzeichnet,**
**dass** als das Nutzerprofil des Nutzers des Kleinkraftwerkes (100) ein Tagesverlauf des Nutzerprofils und/oder ein Wochenverlauf des Nutzerprofils und/oder ein Monatsverlauf des Nutzerprofils und/oder ein Jahresverlauf des Nutzerprofils bereitgestellt werden.

4. Betriebsverfahren nach einem der vorherigen Ansprüche,
**dadurch gekennzeichnet,**
**dass** die Betriebsstrategie für das Kleinkraftwerk (100) entsprechend der ermittelten Speicherkapazität und/oder entsprechend dem Nutzerprofil und/oder entsprechend dem mindestens einem Anlagenparameter des Kleinkraftwerkes (100) durch die Steuerungseinrichtung (10) angepasst wird.

5. Betriebsverfahren nach einem der vorherigen Ansprüche,
**dadurch gekennzeichnet,**
**dass** beim Ermitteln (S2) der Speicherkapazität des elektrischen Energiespeichers (50) durch die Sensoreinrichtung (20) die dem elektrischen Energiespeicher (50) entnommene oder zugeführte elektrische Ladungsmenge durch die Sensoreinrichtung (20) erfasst wird.

6. Betriebsverfahren nach einem der vorherigen Ansprüche,
**dadurch gekennzeichnet,**
**dass** beim Ermitteln (S2) des Nutzerprofils des Nutzers des Kleinkraftwerkes (100) die durch den Nutzer entnommene oder zugeführte elektrische Ladungsmenge durch die Sensoreinrichtung (20) erfasst wird.

7. Betriebsverfahren nach einem der vorherigen Ansprüche,
**dadurch gekennzeichnet,**
**dass** zum Erhöhen der Lebensdauer des elektrischen Energiespeichers (50) ein oder mehrere bestimmte ungünstige Ladezustände des elektrischen Energiespeichers (50) in der Betriebsstrategie festgelegt werden.

8. Betriebsverfahren nach einem der vorherigen Ansprüche,
**dadurch gekennzeichnet,**
**dass** zum Erhöhen der Lebensdauer des elektrischen Energiespeichers (50) eine bestimmte Entladetiefe des elektrischen Energiespeichers (50) in der Betriebsstrategie festgelegt wird.

9. Betriebsverfahren nach einem der vorherigen Ansprüche,
**dadurch gekennzeichnet,**
**dass** zum Erhöhen der Lebensdauer des elektrischen Energiespeichers (50) ein bestimmter Lade- und Entladezyklus des elektrischen Energiespeichers (50) in der Betriebsstrategie festgelegt wird.

10. Betriebsverfahren nach einem der vorherigen Ansprüche,
**dadurch gekennzeichnet,**
**dass** zum Maximieren des Selbstverbrauches von mittels des Kleinkraftwerks (100) erzeugter elektrischer Energie ein zusätzlicher zeitlich variabler Bedarf und/oder ein zusätzlicher zeitlich variabler Überschuss an elektrischer Energie mittels Energiefluss in ein und/oder aus einem Stromnetz (SN) in der Betriebsstrategie festgelegt wird.

11. Betriebsverfahren nach einem der vorherigen Ansprüche,
**dadurch gekennzeichnet,**
**dass** als der mindestens eine Anlagenparameter des Kleinkraftwerks (100) eine auf Wetterdaten basierende Prognose einer Ertragsleistung des Kleinkraftwerks (100) bereitgestellt wird.

12. Betriebsvorrichtung (5) für einen als Batterie ausgebildeten elektrischen Energiespeicher (50) eines Kleinkraftwerkes (100) zum Erhöhen der Betriebseffektivität des Kleinkraftwerkes (100), wobei die Betriebsvorrichtung (5) aufweist:
- eine Datenspeichereinrichtung (30) zum Bereitstellen (S1) von mindestens einem Anlagenparameter, wie Widerbeschaffungskosten einer wegen erfolgter Alterung auszutauschenden Batterie, des Kleinkraftwerkes (100);
- eine Sensoreinrichtung (20), welche dazu ausgelegt ist, eine Speicherkapazität des elektrischen Energiespeichers (50) des Kleinkraftwerkes (100), ein Ertragsprofil des Kleinkraftwerkes (100) und ein Nutzerprofil eines Nutzers des Kleinkraftwerkes (100) zu ermitteln; und
- eine Steuerungseinrichtung (10), welche dazu ausgelegt ist, eine Betriebsstrategie für das Kleinkraftwerk (100) in Abhängigkeit von der ermittelten Speicherkapazität, von dem Ertragsprofil, von dem Nutzerprofil und von dem mindestens einem Anlagenparameter des Kleinkraftwerkes (100) festzulegen; und die Steuerungseinrichtung (10) dazu ausgelegt ist, das Kleinkraftwerk anhand der festgelegten Betriebsstrategie zum Erhöhen der Betriebseffektivität des Kleinkraftwerkes (100) zu steuern **dadurch gekennzeichnet, dass**
die Steuerungseinrichtung (10) ausgelegt ist, die Betriebsstrategie für das Kleinkraftwerk (100) derart festzulegen, dass die Betriebseffektivität durch ein Erhöhen einer Lebensdauer des elektrischen Energiespeichers (50) erhöht wird, wobei die Erhöhung der Lebensdauer des elektrischen Energiespeichers (50) erfolgt, indem Zyklen vermieden werden, in denen weniger als 1 % der Speicherenergie der Batterie umgesetzt wird und alternativ indem Spitzenlasten aus dem Stromnetz anstatt aus der Batterie entnommen werden, ebenso indem das Laden der Batterie mit Laderaten höher als 10 % der Gesamtkapazität erfolgt.

13. Betriebsvorrichtung (5) nach Anspruch 12,
**dadurch gekennzeichnet,**
**dass** die Datenspeichereinrichtung (30) dazu ausgelegt ist, als den mindestens einen Anlagenparameter einen Tagesverlauf einer Kraftwerksleistung des Kleinkraftwerks (100) und/oder einen Wochenverlauf einer Kraftwerksleistung des Kleinkraftwerks
(100) und/oder einen Monatsverlauf einer Kraftwerksleistung des Kleinkraftwerks
(100) und/oder einen Jahresverlauf einer Kraftwerksleistung des Kleinkraftwerks
(100) und/oder eine Nennleistung des Kleinkraftwerks (100) und/oder ein Lastprofil des Kleinkraftwerks (100) bereitzustellen.

## Claims

1. Operating method for an electrical energy store (50), in the form of a battery, of a small-scale power plant (100) for increasing the operating efficiency of the small-scale power plant (100), comprising the steps:
- providing (S1) at least one system parameter of the small-scale power plant (100);
- determining (S2) a storage capacity of the electrical energy store (50) of the small-scale power plant (100), a yield profile of the small-scale power plant (100) and a user profile of a user of the small-scale power plant (100) by means of a sensor device (20);
- defining (S3) an operating strategy for the small-scale power plant (100) as a function of the determined storage capacity, of the yield profile of the small-scale power plant (100), of the user profile and of the at least one system parameter of the small-scale power plant (100) by means of a control device (10); and
- controlling (S4) the small-scale power plant on the basis of the defined operating strategy by means of the control device (10), in order to increase the operating efficiency of the small-scale power plant (100), **characterized in that**
the operating efficiency is increased by increasing a service life of the electrical energy store (50) **in that** cycles are avoided in which fewer than 1% of the storage energy of the battery is implemented and alternatively in that peak loads are taken from the power grid instead of from the battery, and also **in that** the battery is charged with charging rates higher than 10% of the overall capacity.

2. Operating method according to Claim 1, **characterized**
**in that** a daily progression of a power plant output of the small-scale power plant (100) and/or a weekly progression of a power plant output of the small-scale power plant (100) and/or a monthly progression of a power plant output of the small-scale power plant (100) and/or an annual progression of a power plant output of the small-scale power plant (100) and/or a rated output of the small-scale power plant (100) is/are provided as the yield profile of the small-scale power plant (100).

3. Operating method according to one of Claims 1 and 2, **characterized**
**in that** a daily progression of the user profile and/or a weekly progression of the user profile and/or a monthly progression of the user profile and/or an annual progression of the user profile is/are provided as the user profile of the user of the small-scale power plant (100) .

4. Operating method according to one of the preceding claims,
**characterized**
**in that** the operating strategy for the small-scale power plant (100) is adapted by means of the control device (10) in accordance with the determined storage capacity and/or in accordance with the user profile and/or in accordance with the at least one system parameter of the small-scale power plant (100).

5. Operating method according to one of the preceding claims,
**characterized**
**in that**, during the determination (S2) of the storage capacity of the electrical energy store (50) by means of the sensor device (20), the electrical charge quantity which is extracted from or fed to the electrical energy store (50) is sensed by the sensor device (20).

6. Operating method according to one of the preceding claims,
**characterized**
**in that**, during the determination (S2) of the user profile of the user of the small-scale power plant (100), the electrical charge quantity which is extracted or fed in by the user is sensed by the sensor device (20).

7. Operating method according to one of the preceding claims,
**characterized**
**in that**, in order to increase the service life of the electrical energy store (50), one or more specific unfavourable states of charge of the electrical energy store (50) are defined in the operating strategy.

8. Operating method according to one of the preceding claims,
**characterized**
**in that**, in order to increase the service life of the electrical energy store (50), a specific discharge level of the electrical energy store (50) is defined in the operating strategy.

9. Operating method according to one of the preceding claims,
**characterized**
**in that**, in order to increase the service life of the electrical energy store (50), a specific charging cycle and discharging cycle of the electrical energy store (50) is defined in the operating strategy.

10. Operating method according to one of the preceding claims,
**characterized**
**in that**, in order to maximize the inherent consumption of electrical energy generated by the small-scale power plant (100), an additional chronologically variable demand and/or an additional chronologically variable excess of electrical energy by means of flows of energy into and/or out of a power grid (SN) is/are defined in the operating strategy.

11. Operating method according to one of the preceding claims,
**characterized**
**in that** a prediction of a yield performance of the small-scale power plant (100), based on weather data, is provided as the at least one system parameter of the small-scale power plant (100).

12. Operating device (5) for an electrical energy store (50), in the form of a battery, of a small-scale power plant (100) for increasing the operating efficiency of the small-scale power plant (100), wherein the operating device (5) has:
- a data storage device (30) for providing (S1) at least one system parameter, such as replacement costs of a battery which is to be exchanged after ageing has taken place, of the small-scale power plant (100);
- a sensor device (20) which is configured to determine a storage capacity of the electrical energy store (50) of the small-scale power plant (100), a yield profile of the small-scale power plant (100), and a user profile of a user of the small-scale power plant (100); and
- a control device (10) which is configured to define an operating strategy for the small-scale power plant (100) as a function of the determined storage capacity, of the yield profile, of the user profile, and of the at least one system parameter of the small-scale power plant (100); and the control device (10) is configured to control the small-scale power plant on the basis of the defined operating strategy to increase the operating efficiency of the small-scale power plant (100), **characterized in that**
the control device (10) is configured to define the operating strategy for the small-scale power plant (100) in such a way that the operating efficiency is increased by increasing a service life of the electrical energy store (50), wherein the service life of the electrical energy store (50) is increased by avoiding cycles in which less than 1% of the storage energy of the battery is implemented and alternatively by extracting peak loads from the power grid instead of from the battery, and also by charging the battery with charging rates higher than 10% of the overall capacity.

13. Operating device (5) according to Claim 12, **characterized**
**in that** the data storage device (30) is configured to provide a daily progression of a power plant output of the small-scale power plant (100) and/or a weekly progression of a power plant output of the small-scale power plant (100) and/or a monthly progression of a power plant output of the small-scale power plant (100) and/or an annual progression of a power plant output of the small-scale power plant (100) and/or a rated output of the small-scale power plant (100) and/or a load profile of the small-scale power plant (100) as the at least one system parameter.

## Revendications

1. Procédé d'exploitation pour un accumulateur d'énergie électrique (50), réalisé sous forme de batterie, d'une microcentrale (100) pour augmenter l'efficacité d'exploitation de la microcentrale (100), comprenant les étapes consistant à :
- fournir (S1) au moins un paramètre d'installation de la microcentrale (100) ;
- déterminer (S2) par un dispositif de détection (20) une capacité de stockage de l'accumulateur d'énergie électrique (50) de la microcentrale (100), un profil de rendement de la microcentrale (100) et un profil d'utilisateur d'un utilisateur de la microcentrale (100) ;
- établir (S3) par un dispositif de commande (10) une stratégie d'exploitation pour la microcentrale (100) en fonction de la capacité de stockage déterminée, du profil de rendement de la microcentrale (100), du profil d'utilisateur et dudit au moins un paramètre d'installation de la microcentrale (100) ; et
- commander (S4) la microcentrale à l'aide de la stratégie d'exploitation établie par le dispositif de commande (10) pour augmenter l'efficacité d'exploitation de la microcentrale (100),
**caractérisé en ce que** l'efficacité d'exploitation est augmentée par l'augmentation d'une durée de vie de l'accumulateur d'énergie électrique (50) en évitant des cycles dans lesquels moins de 1 % de l'énergie accumulée de la batterie est transformée, et en variante en prélevant des charges de pointe sur le réseau électrique au lieu de la batterie, ainsi qu'en utilisant le chargement de la batterie avec des régimes de charge supérieurs à 10 % de la capacité totale.

2. Procédé d'exploitation selon la revendication 1, **caractérisé en ce qu'**une courbe journalière d'une puissance de centrale de la microcentrale (100) et/ou une courbe hebdomadaire d'une puissance de centrale de la microcentrale (100) et/ou une courbe mensuelle d'une puissance de centrale de la microcentrale (100) et/ou une courbe annuelle d'une puissance de centrale de la microcentrale (100) et/ou une puissance nominale de la microcentrale (100) sont fournies en tant que profil de rendement de la microcentrale (100).

3. Procédé d'exploitation selon l'une quelconque des revendications 1 et 2, **caractérisé en ce qu'**une courbe journalière du profil d'utilisateur et/ou une courbe hebdomadaire du profil d'utilisateur et/ou une courbe mensuelle du profil d'utilisateur et/ou une courbe annuelle du profil d'utilisateur sont fournies en tant que profil d'utilisateur de l'utilisateur de la microcentrale (100).

4. Procédé d'exploitation selon l'une quelconque des revendications précédentes, **caractérisé en ce que** la stratégie d'exploitation pour la microcentrale (100) est adaptée par le dispositif de commande (10) en fonction de la capacité de stockage déterminée et/ou en fonction du profil d'utilisateur et/ou en fonction dudit au moins un paramètre d'installation de la microcentrale (100).

5. Procédé d'exploitation selon l'une quelconque des revendications précédentes, **caractérisé en ce que** lors de la détermination (S2) de la capacité de stockage de l'accumulateur d'énergie électrique (50) par le dispositif de détection (20), la quantité de charge électrique prélevée sur ou apportée à l'accumulateur d'énergie électrique (50) est détectée par le dispositif de détection (20) .

6. Procédé d'exploitation selon l'une quelconque des revendications précédentes, **caractérisé en ce que** lors de la détermination (S2) du profil d'utilisateur de l'utilisateur de la microcentrale (100), la quantité de charge électrique prélevée ou apportée par l'utilisateur est détectée par le dispositif de détection (20).

7. Procédé d'exploitation selon l'une quelconque des revendications précédentes, **caractérisé en ce que** pour augmenter la durée de vie de l'accumulateur d'énergie électrique (50), un ou plusieurs états de charge défavorables déterminés de l'accumulateur d'énergie électrique (50) sont établis dans la stratégie d'exploitation.

8. Procédé d'exploitation selon l'une quelconque des revendications précédentes, **caractérisé en ce que** pour augmenter la durée de vie de l'accumulateur d'énergie électrique (50), un certain niveau de décharge de l'accumulateur d'énergie électrique (50) est établi dans la stratégie d'exploitation.

9. Procédé d'exploitation selon l'une quelconque des revendications précédentes, **caractérisé en ce que** pour augmenter la durée de vie de l'accumulateur d'énergie électrique (50), un certain cycle de charge et de décharge de l'accumulateur d'énergie électrique (50) est établi dans la stratégie d'exploitation.

10. Procédé d'exploitation selon l'une quelconque des revendications précédentes, **caractérisé en ce que** pour maximiser l'autoconsommation de l'énergie électrique générée au moyen de la microcentrale (100), une demande supplémentaire, variable dans le temps, et/ou un excédent supplémentaire, variable dans le temps, en énergie électrique au moyen d'un flux énergétique à destination et/ou en provenance d'un réseau électrique (SN) sont établis dans la stratégie d'exploitation.

11. Procédé d'exploitation selon l'une quelconque des revendications précédentes, **caractérisé en ce qu'**un pronostic basé sur des données météorologiques d'un rendement de la microcentrale (100) est fourni comme ledit au moins un paramètre d'installation de la microcentrale (100).

12. Dispositif d'exploitation (5) pour un accumulateur d'énergie électrique (50), réalisé sous forme de batterie, d'une microcentrale (100) pour augmenter l'efficacité d'exploitation de la microcentrale (100), le dispositif d'exploitation (5) présentant :
- un dispositif de stockage de données (30) pour fournir (S1) au moins un paramètre d'installation de la microcentrale (100), comme les coûts de remplacement d'une batterie à échanger suite au vieillissement survenu ;
- un dispositif de détection (20) qui est conçu pour déterminer une capacité de stockage de l'accumulateur d'énergie électrique (50) de la microcentrale (100), un profil de rendement de la microcentrale (100) et un profil d'utilisateur d'un utilisateur de la microcentrale (100) ; et
- un dispositif de commande (10) qui est conçu pour établir une stratégie d'exploitation pour la microcentrale (100) en fonction de la capacité de stockage déterminée, du profil de rendement, du profil d'utilisateur et dudit au moins un paramètre d'installation de la microcentrale (100) ; et le dispositif de commande (10) est conçu pour commander la microcentrale à l'aide de la stratégie d'exploitation établie pour augmenter l'efficacité d'exploitation de la microcentrale (100),
**caractérisé en ce que** le dispositif de commande (10) est conçu pour établir la stratégie d'exploitation pour la microcentrale (100) de telle sorte que l'efficacité d'exploitation est augmentée par l'augmentation d'une durée de vie de l'accumulateur d'énergie électrique (50),
l'augmentation de la durée de vie de l'accumulateur d'énergie électrique (50) étant effectuée en évitant des cycles dans lesquels moins de 1 % de l'énergie accumulée de la batterie est transformée, et en variante en prélevant des charges de pointe sur le réseau électrique au lieu de la batterie, ainsi qu'en utilisant le chargement de la batterie avec des régimes de charge supérieurs à 10 % de la capacité totale.

13. Dispositif d'exploitation (5) selon la revendication 12, **caractérisé en ce que** le dispositif de stockage de données (30) est conçu pour fournir une courbe journalière d'une puissance de centrale de la microcentrale (100) et/ou une courbe hebdomadaire d'une puissance de centrale de la microcentrale (100) et/ou une courbe mensuelle d'une puissance de centrale de la microcentrale (100) et/ou une courbe annuelle d'une puissance de centrale de la microcentrale (100) et/ou une puissance nominale de la microcentrale (100) et/ou un profil de charge de la microcentrale (100) comme ledit au moins un paramètre d'installation.
